# EUROPEAN PATENT APPLICATION

(11) **EP 4 564 466 A1**
(43) Date of publication of application: **04.06.2025**
(21) Application number: 23846515.7
(22) Date of filing: 25.07.2023
(51) Int. Cl.: H01M 4/139, B05D 1/42, B05D 5/12, H01M 4/04

(54) **PRODUCTION METHOD FOR SHEET-LIKE ELECTRODE MOLDING**

(30) Priority: 28.07.2022 JP 2022120972
(71) Applicant: FUJIFILM Corporation, Tokyo 106-8620 (JP)
(72) Inventor: IWASE, Eijiro, ashigara-shi, Kanagawa 250-0193 (JP); KODAMA, Taiga, ashigara-shi, Kanagawa 250-0193 (JP); ITO, Hisateru, ashigara-shi, Kanagawa 250-0193 (JP)
(74) Representative: Meissner Bolte Partnerschaft mbB
(86) International application number: PCT/JP2023/027220
(87) International publication number: WO 2024/024785

(57) **Abstract**

Provided is a manufacturing method of a molded body for a sheet-like electrode, the manufacturing method including a step of forming an electrode material film on a support using an electrode material which contains an electrode active material and has a concentration of solid components of 30% by volume or more, in which, with the electrode material supplied onto the support, the electrode material film is formed by, while maintaining a constant distance from a surface of the support, relatively moving a blade having a shape in which both end parts in a width direction protrude than a center portion in the width direction and the center portion in the width direction vibrates, along the surface of the support such that a thickness is regulated by a void between the surface of the support and the center portion of the blade in the width direction and a width is regulated by both end parts of the blade in the width direction, which protrude than the center portion of the blade in the width direction.

## Description

### BACKGROUND OF THE INVENTION

### 1. Field of the Invention

The present disclosure relates to a manufacturing method of a molded body for a sheet-like electrode.

### 2. Description of the Related Art

In recent years, development of a semi-solid state battery or an all-solid state battery has been studied.

Manufacturing of an electrode applied to the semi-solid state battery or the all-solid state battery includes, for example, a step of applying an electrode material containing an electrode active material or the like, which is a powder, onto a support.

For example, JP2017-533548A discloses a method of manufacturing an electrochemical cell, including a step of coating a first surface of a negative collector with a semi-solid anode, in which the step includes a step of disposing a frame which defines an opening portion on the first surface of the negative collector, a step of disposing the semi-solid anode in the opening portion of the frame, and a step of removing an excess semi-solid anode material from the opening portion; and it is also disclosed that the excess semi-solid anode material is removed by a doctor blade which vibrates.

In addition, regardless of the manufacturing of the electrode, as a method of applying a material containing a powder, for example, JP2011-071153A discloses a method of applying a metal paste consisting of a metal powder having an average particle diameter of 0.005 µm to 1.0 µm and an organic solvent to a substrate while applying mechanical vibration with a frequency of 60 Hz to 100 kHz to the metal paste.

### SUMMARY OF THE INVENTION

In a case of producing a molded body for an electrode used in the semi-solid state battery or the all-solid state battery, a step of forming an electrode material film having a thickness corresponding to a molded body for a sheet-like electrode using an electrode material containing an electrode active material is included. In the step, in a case where an electrode material which does not contain an electrolytic solution or contains a small amount of the electrolytic solution is used, the thickness of the electrode material film varies, and it is difficult to obtain a molded body for a sheet-like electrode having excellent in-plane thickness uniformity.

Therefore, the present disclosure has been made in view of the above-described circumstances.

An object of one embodiment of the present disclosure is to provide a manufacturing method of a molded body for a sheet-like electrode, which has excellent in-plane thickness uniformity.

The present disclosure includes the following aspects.
<1> A manufacturing method of a molded body for a sheet-like electrode, the manufacturing method comprising:
   a step of forming an electrode material film on a support using an electrode material which contains an electrode active material and has a concentration of solid components of 30% by volume or more,
   in which, with the electrode material supplied onto the support, the electrode material film is formed by, while maintaining a constant distance from a surface of the support, relatively moving a blade having a shape in which both end parts in a width direction protrude than a center portion in the width direction and the center portion in the width direction vibrates, along the surface of the support such that a thickness is regulated by a void between the surface of the support and the center portion of the blade in the width direction and a width is regulated by both end parts of the blade in the width direction, which protrude than the center portion of the blade in the width direction.
<2> The manufacturing method of a molded body for a sheet-like electrode according to <1>,
   in which an electrode material before the regulation of thickness and width, which is at least a part of the electrode material supplied onto the support, forms a reservoir portion in a region sandwiched between the support and the blade.
<3> The manufacturing method of a molded body for a sheet-like electrode according to <2>,
   in which the electrode material is continuously or intermittently supplied to the reservoir portion.
<4> The manufacturing method of a molded body for a sheet-like electrode according to <3>,
   in which a ratio X:Y of a supply amount X of the electrode material to a liquid pool portion and a formation amount Y of the electrode material film formed on the support is 1:0.1 to 1:1 on a mass basis.
<5> The manufacturing method of a molded body for a sheet-like electrode according to any one of <1> to <4>,
   in which a friction coefficient µ1 between a contact portion of the blade with the electrode material and the electrode material is smaller than a frictional coefficient µ2 between the electrode material and the support.
<6> The manufacturing method of a molded body for a sheet-like electrode according to any one of <1> to <5>,
   in which a ratio A:B of an amplitude A at the center portion of the vibrating blade in the width direction and a thickness B of the electrode material film formed on the support is 1: 10 to 1:200.

According to the present disclosure, it is possible to provide a manufacturing method of a molded body for an electrode, which is capable of manufacturing a molded body for a sheet-like electrode having excellent in-plane thickness uniformity.

### BRIEF DESCRIPTION OF THE DRAWINGS

Fig. 1 is a schematic view showing an example of a device used in a step of forming an electrode material film in the manufacturing method of a molded body for an electrode according to the present disclosure.
Fig. 2 is a schematic view showing an example of a device used in a step of forming an electrode material film in the manufacturing method of a molded body for an electrode according to the present disclosure.
Fig. 3 is a schematic view for describing an example of a shape of a blade.
Fig. 4 is a schematic view for describing another example of a shape of the blade.
Fig. 5 is a schematic view for describing still another example of a shape of the blade.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

In the present disclosure, "width direction" of a blade refers to a direction orthogonal to a direction in which the blade relatively is moved along a surface of a support (that is, a direction in which an electrode material film is formed on the support). That is, the "width direction" of the blade also corresponds to "width direction" of the electrode material film.

In the present disclosure, "center portion in the width direction" of the blade refers to a center portion of the blade in the width direction, and is a region determined according to a width of the electrode material film to be formed on the support. In other words, "both end parts in the width direction" of the blade refer to both end portions of the blade in the width direction, and are regions outside the "center portion in the width direction" described above.

### <Manufacturing method of molded body for sheet-like electrode>

The manufacturing method of a molded body for a sheet-like electrode according to the present disclosure is a manufacturing method of a molded body for a sheet-like electrode, the manufacturing method including a step of forming an electrode material film on a support using an electrode material which contains an electrode active material and has a concentration of solid components of 30% by volume or more, in which, with the electrode material supplied onto the support, the electrode material film is formed by, while maintaining a constant distance from a surface of the support, relatively moving a blade having a shape in which both end parts in a width direction protrude than a center portion in the width direction and the center portion in the width direction vibrates, along the surface of the support such that a thickness is regulated by a void between the surface of the support and the center portion of the blade in the width direction and a width is regulated by both end parts of the blade in the width direction, which protrude than the center portion of the blade in the width direction.

Hereinafter, the "electrode material which contains an electrode active material and has a concentration of solid components of 30% by volume or more" will also be simply referred to as "electrode material"; and the "molded body for a sheet-like electrode" will also be simply referred to as "molded body for an electrode".

For example, in a case of forming an electrode material film on a support using an electrode material that contains an electrode active material and has a concentration of solid components of 30% by volume or more, a content of liquid components in the electrode material may not be high and a thickness of the electrode material film may vary, and as a result, there is a problem that it is difficult to obtain a molded body for a sheet-like electrode having excellent in-plane thickness uniformity.

As a result of the examination conducted by the present inventors on the above-described problem, it has been found that, in a case where the electrode material film is formed on the support using the above-described electrode material, a method in which, while maintaining a constant distance from a surface of the support, a blade having a shape in which both end parts in a width direction protrude than a center portion in the width direction and the center portion in the width direction vibrates is relatively moved along the surface of the support such that, with the electrode material supplied onto the support, a thickness is regulated by a void between the surface of the support and the center portion of the blade in the width direction and a width is regulated by both end parts of the blade in the width direction. According to the method, the electrode material having regulated thickness and width is effectively applied onto the surface of the support, the variation in thickness of the electrode material film to be formed is unlikely to occur, and the in-plane thickness uniformity of the molded body for a sheet-like electrode is enhanced.

From the above, in the manufacturing method of a molded body for a sheet-like electrode according to the present disclosure, a molded body for a sheet-like electrode having excellent in-plane thickness uniformity is manufactured.

### [Step of forming electrode material film]

The manufacturing method of a molded body for an electrode according to the present disclosure includes a step of forming an electrode material film on a support using an electrode material.

In the electrode material film obtained by the present step, a blade having a shape in which both end parts in the width direction protrude than the center portion in the width direction and the center portion in the width direction vibrates is relatively moved along the surface of the support while maintaining a constant distance from the surface of the support. By the relative movement between the blade and the support, the thickness of the electrode material supplied onto the support can be regulated by the void between the support and the center portion of the blade in the width direction, and the width thereof can be regulated by the both end parts of the blade in the width direction. As a result, the electrode material with a regulated thickness and width is applied onto the surface of the support, and the electrode material film is formed on the support.

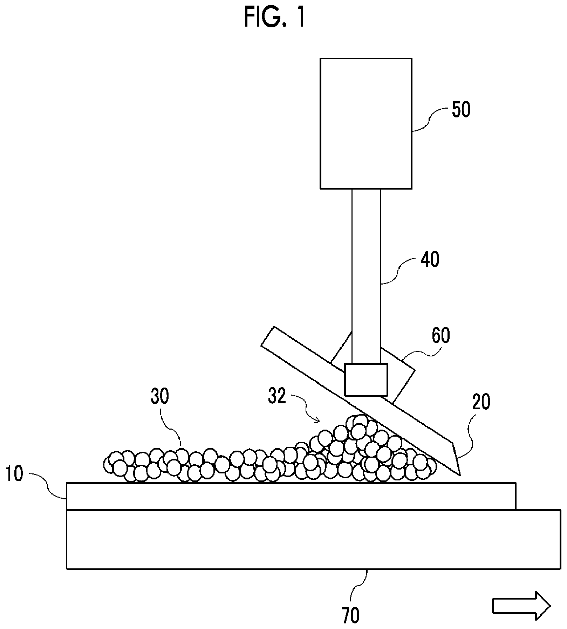

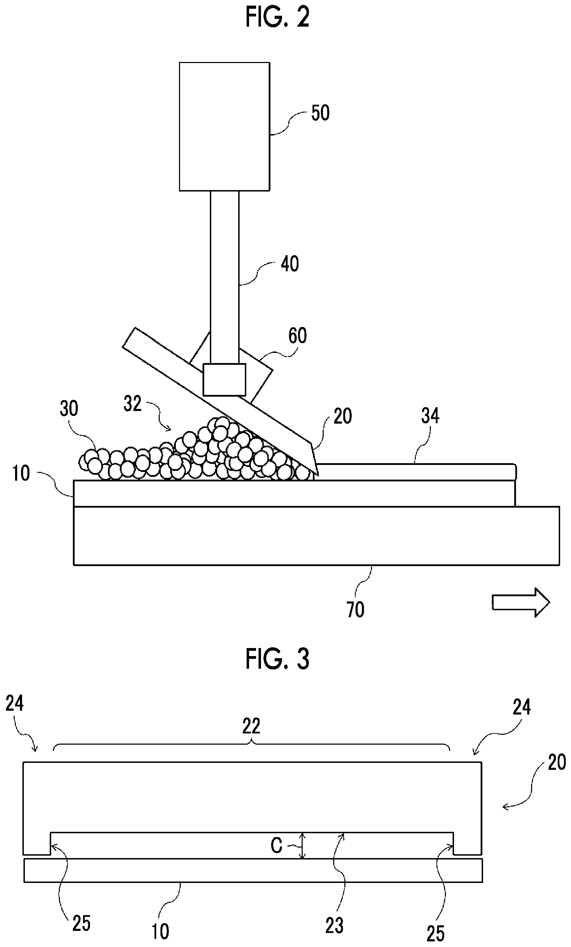

The present step will be described with reference to Figs. 1 to 5. Figs. 1 and 2 are schematic views for describing an example of a device used in the step of forming the electrode material film. In addition, Figs. 3 to 5 are schematic views for describing the shape of the blade.

In Fig. 1, 10 indicates a support; 20 indicates a blade, 30 indicates an electrode material; 32 indicates a reservoir portion of the electrode material; 40 indicates a pressurization shaft for maintaining a distance between the blade and the surface of the support constant; 50 indicates an air cylinder connected to the pressurization shaft; 60 indicates an exciter which vibrates the blade; and 70 indicates a movement stage which moves the support. The blade 20 is fixed to a frame (not shown).

Here, the shape of the blade 20 will be described with reference to Figs. 3 to 5.

As shown in Fig. 3, the blade 20 has a shape in which both end parts 24 in the width direction protrude than a center portion 22 in the width direction. By adopting such a shape, a void having a distance C is formed between the center portion 22 in the width direction and the surface of the support 10. In this case, a void may or may not be present between the both end parts 24 in the width direction and the surface of the support 10; but it is preferable that a void having a distance smaller than the distance C is formed between the both end parts 24 in the width direction and the surface of the support 10. That is, it is preferable that the both end parts 24 in the width direction and the surface of the support 10 are in a contactless state.

In the case of the blade 20, since the width of the electrode material film is regulated by inner side surfaces 25 of the both end parts 24 in the width direction, the width of the electrode material film to be formed is determined by the width (length) of the center portion 22 in the width direction. From the viewpoint of forming an electrode material film having a rectangular cross section, as shown in Fig. 3, it is preferable that a distal end surface 23 and inner side surfaces 25 of the center portion 22 in the width direction are straight lines and an angle formed by the distal end surface 23 and the side surface 25 is a right angle.

As shown in Fig. 3, in the blade 20, the center portion 22 in the width direction and the both end parts 24 in the width direction are integrated, but the blade 20 is not limited to this form.

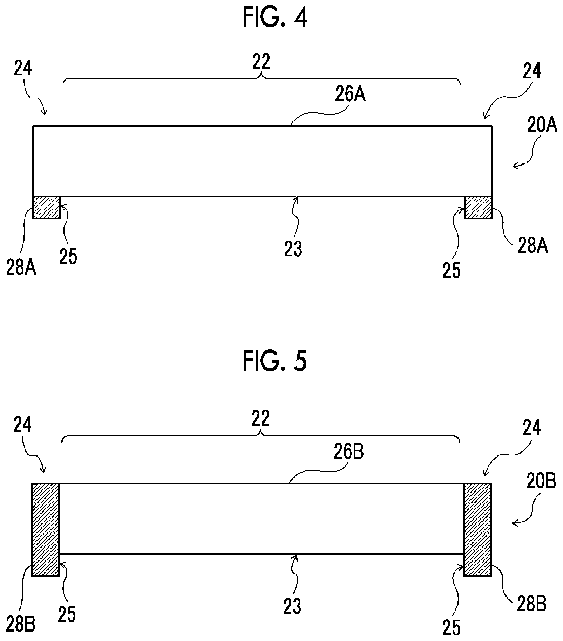

For example, as a blade 20A shown in Fig. 4, a body part 26A of the blade and protruding parts 28A provided at both ends of the body part 26A of the blade in the width direction may be bonded (joined) to each other, and thus the both end parts 24 in the width direction may have a shape protruding than the center portion 22 in the width direction. The body part 26A of the blade and the protruding parts 28A may be directly bonded (joined) to each other or may be bonded (joined) to each other through a bonding member. For example, in a case where the bonding member is a member which does not transmit or is difficult to transmit vibration, the protruding part 28A can be in a state of not vibrating or slightly vibrating in a case where the body part 26A of the blade vibrates (it can be said that the center portion 22 in the width direction vibrates).

Here, from the viewpoint of forming an electrode material film having a rectangular cross section, as shown in Fig. 4, it is preferable that the distal end surface 23 of the body part 26A of the blade (that is, the distal end surface 23 of the center portion 22 in the width direction of the blade 20A) and inner side surfaces 25 of the protruding parts 28A (that is, inner side surfaces 25 of the both end parts 24 in the width direction of the blade 20A) are straight lines, and an angle formed by the distal end surface 23 and the side surface 25 is a right angle. In addition, the protruding part 28A is not particularly limited in shape and size as long as the side surface 25 is a straight line, the angle formed by the distal end surface 23 and the side surface 25 is a right angle, and the protruding part 28A is in a contactless state with the surface of the support.

**In** addition, as a blade 20B shown in Fig. 5, a body part 26B of the blade and width regulation members 28B provided may be bonded (joined) to each other at both ends of the body part 26B of the blade, and thus the both end parts 24 in the width direction may have a shape protruding than the center portion 22 in the width direction. The body part 26B of the blade and the width regulation member 28B may be directly bonded (joined) to each other or may be bonded (joined) to each other through a bonding member. For example, in a case where the bonding member is a member which does not transmit or is difficult to transmit vibration, the width regulation member 28B can be in a state of not vibrating or slightly vibrating in a case where the center portion 22 in the width direction (that is, the body part 26B of the blade) vibrates.

Here, from the viewpoint of forming an electrode material film having a rectangular cross section, as shown in Fig. 5, it is preferable that the distal end surface 23 of the body part 26B of the blade (that is, the distal end surface 23 of the center portion 22 in the width direction of the blade 20B) and inner side surfaces 25 of the width regulation members 28B (that is, inner side surfaces 25 of the both end parts 24 in the width direction of the blade 20B) are straight lines, and an angle formed by the distal end surface 23 and the side surface 25 is a right angle. In addition, the width regulation member 28B is not particularly limited in shape and size as long as the side surface 25 is a straight line, the angle formed by the distal end surface 23 and the side surface 25 is a right angle, and the width regulation member 28B is in a contactless state with the surface of the support.

In the present step, by the relative movement between the blade and the support, the thickness of the electrode material supplied onto the support can be regulated by the void between the support and the center portion of the blade in the width direction, and the width thereof can be regulated by the both end parts of the blade in the width direction; but the regulation of the thickness of the electrode material and the regulation of the width of the electrode material may be performed at the same time or may be performed at different times (that is, with a time difference). For example, in a case where the thickness of the blade is large, the regulation of the thickness of the electrode material and the regulation of the width of the electrode material can be performed at different times (that is, with a time difference) by, for example, performing the regulation of the width of the electrode material, and then performing the regulation of the thickness of the electrode material.

As shown in Fig. 1, the blade 20 is installed such that the center portion 22 in the width direction maintains a constant distance C from the surface of the support 10 placed on the movement stage 70. The blade 20 is connected to the air cylinder 50 through the pressurization shaft 40, and the blade 20 is pressed toward the support 10 side to maintain the constant distance C even in a state in which the blade 20 is in contact with an electrode material 30 and the support 10 is moved in the arrow direction. In addition, the blade 20 is pressed with a pressure so as to face a repulsive force (that is, a force which pushes the blade 20) from the electrode material 30 in contact with the blade 20 so as to maintain the constant distance C.

In addition, as shown in Fig. 1, the electrode material 30 supplied onto the support 10 accumulates between the support 10 and the blade 20 to form the reservoir portion 32 which is thicker than a void having the distance C between the blade 20 and the support 10, and the support 10 is moved in the arrow direction by the movement stage 70 from this state, so that the electrode material 30 passes through the void having the distance C between the blade 20 and the support 10. In a case where the electrode material 30 passes through the void having the distance C, the thickness and the width of the electrode material 30 are regulated by the contact with the center portion in the width direction and the both end parts in the width direction of the blade 20, and the electrode material 30 is further applied onto the surface of the support 10, and thus an electrode material film 34 formed of the electrode material 30 is formed on the support 10 as shown in Fig. 2.

In addition, in a case where the electrode material 30 passes through the above-described void having the distance C, the center portion of the blade 20 in the width direction is vibrated by the exciter 60, and this vibration propagates to the electrode material 30 and a shearing force is applied, so that, in at least a contact portion of the electrode material 30 with the center portion of the blade 20 in the width direction, a decrease in viscosity, an improvement in fluidity, and the like occur. As a result, it is presumed that at least the surface of the electrode material film 34 formed by being applied onto the support 10 as described above is leveled, and the electrode material film 34 with a small variation in thickness is formed.

As shown in Fig. 1, the electrode material 30 before the regulation of thickness and width, which is at least a part of the electrode material 30 supplied onto the support 10, forms the reservoir portion 32 in a region sandwiched between the support 10 and the blade 20. It is preferable that the electrode material is continuously or intermittently supplied to the reservoir portion. Among these, from the viewpoint of obtaining an electrode material film with a small variation in thickness, a ratio X:Y of a supply amount X of the electrode material to a liquid pool portion and a formation amount Y of the electrode material film formed on the support is preferably 1:0.1 to 1:1, more preferably 1:0.5 to 1:0.99, still more preferably 1:0.80 to 1:0.99, and particularly preferably 1:0.90 to 1:0.99, on a mass basis.

Figs. 1 and 2 show an aspect in which the support 10 is transported and moved in the arrow direction (that is, in a certain direction) with respect to the fixed blade 20, but the present invention is not limited to this aspect.

In the manufacturing method of a molded body for an electrode according to the present disclosure, it is sufficient that the surface of the support and the blade are moved relative to each other, and in addition to the above-described aspect, the blade may be moved in one direction with respect to a fixed support, or both the support and the blade may be moved in one direction.

However, in order to continuously form the electrode material film, an aspect in which a long support is transported and moved with respect to the fixed blade is preferable.

Hereinafter, the support, the blade, and the electrode material used in the present step will be described.

### [Support]

The support used in the present step is not particularly limited as long as it is a support capable of forming an electrode material film on the surface. **In** particular, from the viewpoint of continuously forming the electrode material film, it is preferable to use a long support. In a case of the long support, a width thereof may be determined according to the size of the electrode material film and the width (length) of the center portion of the blade in the width direction.

### Specific examples of a preferred support include a collector.

The collector which is an example of the support is not particularly limited, and a known collector (a positive electrode collector and a negative electrode collector) can be used.

Examples of the positive electrode collector include aluminum, an aluminum alloy, stainless steel, nickel, and titanium. The positive electrode collector is preferably aluminum or an aluminum alloy. The positive electrode collector may be aluminum having, on a surface thereof, a coating layer containing one or more of carbon, nickel, titanium, silver, gold, platinum, and vanadium oxide.

Examples of the negative electrode collector include aluminum, copper, a copper alloy, stainless steel, nickel, and titanium. The negative electrode collector is preferably aluminum, copper, a copper alloy, or stainless steel, and more preferably copper or a copper alloy. The negative electrode collector may be copper or stainless steel, having, on a surface thereof, a coating layer containing one or more of carbon, nickel, titanium, silver, and lithium.

The collector is preferably an aluminum foil (including an aluminum foil having the above-described coating layer on the surface thereof) or a copper foil (including a copper foil having the above-described coating layer on the surface thereof). The aluminum foil is generally used as a collector in a positive electrode. The copper foil is generally used as a collector in a negative electrode.

The collector used as the support may be a laminate of the metal layer exemplified as the positive electrode collector or the negative electrode collector described above and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

In addition, examples of the support include a release material.

Examples of the release material which is an example of the support include release paper (for example, peeling paper manufactured by LINTEC Corporation), a film having a release layer, and paper having a release layer; and among these, release paper is preferable.

In a case where the release material is used as the support, the electrode material film formed on the release material can be transferred to the collector by utilizing releasability of the release material.

From the viewpoint of transportability and the like, an average thickness of the support (preferably, the collector) is preferably 3 µm or more, more preferably 5 µm or more, and particularly preferably 10 µm or more.

From the viewpoint of flexibility and lightness, the average thickness thereof is preferably 100 µm or less, more preferably 70 µm or less, and particularly preferably 50 µm or less.

The average thickness of the support is an arithmetic average of thicknesses at three points measured by cross-sectional observation. In the cross-sectional observation, a known microscope (for example, a scanning electron microscope) can be used.

A size of the support is not limited, and may be determined according to the size of the molded body for an electrode to be manufactured, the size of various members used in the manufacturing process, and the like.

In addition, in the present step, a transport mechanism of the support (for example, corresponding to the movement stage 70 in Figs. 1 and 2) is not limited, and a known transport unit can be used.

As the transport mechanism of the support, for example, a belt conveyor, a linear motion guide, a cross roller table, or the like can be used.

### [Blade]

In the present step, the blade is installed so as to maintain a constant distance from the surface of the support.

An installation position of the blade may be set according to the void between the surface of the support and the center portion of the blade in the width direction, which is set according to a film thickness of the electrode material film to be formed. The expression "so as to maintain a constant distance from the surface of the support" means that the distance between the surface of the support and a distal end of the center portion of the blade in the width direction is substantially kept constant in a case where the blade is relatively moved along the surface of the support. In the "so as to maintain a constant distance from the surface of the support", for example, the amplitude of the blade generated by the vibration of the blade is allowed. In addition, the "so as to maintain a constant distance from the surface of the support" also includes a position change of the surface of the support in a case where the support is transported (floating of the support and position change caused by wrinkles generated on the support), surface roughness on the surface of the support, and the like. From these, a variation value of the distance between the surface of the support and the center portion of the blade in the width direction in a case where the blade is relatively moved along the surface of the support in a state in which the blade is stopped may be within 3% or 20 µm or less with respect to the distance (that is, a height of the void) between the surface of the support and the center portion of the blade in the width direction, and this is allowed in the case of the "so as to maintain a constant distance from the surface of the support".

In addition, the distance (that is, the height of the void) between the surface of the support and the center portion of the blade in the width direction may be slightly distributed in the width direction, but in a case where the distribution is within 3% or 20 µm, this is allowed in the case.

In the case of "so as to maintain a constant distance from the surface of the support", a distance between the surface of the support and a distal end of both end parts of the blade in the width direction may also be maintained substantially constant in a case where the blade is relatively moved along the surface of the support. In this manner, the regulation of the width of the electrode material can be effectively performed. In addition, by also maintaining the distance between the surface of the support and the distal end of both end parts of the blade in the width direction substantially constant, it is possible to suppress the both end parts of the blade in the width direction from coming into contact with the support. In the distance between the surface of the support and the distal end of the both end parts of the blade in the width direction, an allowable value in a case of "maintaining substantially constant" is the same as the allowable value of the variation value of the distance between the surface of the support and the center portion of the blade in the width direction.

The blade is a member having a plate-like shape, but the shape, size, material, and the like of a contact portion which comes into contact with the electrode material may be appropriately determined depending on the type of the electrode material (the kind of the electrode active material, the concentration of solid components, the composition (viscosity, surface tension, and the like) of the electrolytic solution, and the like), the size and thickness of the electrode material film to be formed, and the like.

In addition, it is preferable that the contact portion of the blade with the electrode material is less likely to have the electrode material adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

In the present step, from the viewpoint of obtaining an electrode material film with less variation in thickness, it is preferable that a friction coefficient µ1 between the contact portion of the blade with the electrode material and the electrode material is smaller than a frictional coefficient µ2 between the electrode material and the support.

As described above, it is presumed that, by satisfying the relationship of the friction coefficient µ1 < the friction coefficient µ2, the electrode material is likely to migrate to the support side, the electrode material is more easily applied to the surface of the support, and as a result, the electrode material film with less variation in thickness is obtained.

The friction coefficient µ1 and the friction coefficient µ2 described above are obtained by forming an electrode material layer from the electrode material, and measuring a friction coefficient between the electrode material layer and the blade or the support.

Specifically, first, a cell (a cylinder with a size having a diameter of 20 mm to 30 mm and a height of 20 mm to 30 mm) is filled with 5 g to 20 g of the electrode material, and voids in the electrode material are removed (that is, air is removed) to form an electrode material layer.

The obtained electrode material layer is placed on the blade or the support, and a weight of 100 g to 1,000 g is further placed on the electrode material layer. Thereafter, the electrode material layer is laterally slid on the blade or the support using a tensile tester (lateral sliding speed: 5 mm/sec). From a relational expression obtained by plotting a relationship between a load in the vertical direction by the weight and a drag force measured by the tensile tester, which is obtained by the lateral slip, the friction coefficient is obtained.

In a case where the blade or the support cannot be applied as it is to the above-described measurement, only the surface of the blade or the support may be taken out, or a measurement sample having the same composition and surface properties as the surface of the blade or the support may be prepared and used for the measurement.

The above-described measurement is carried out in an environment of a dry room at 21°C and 0 %RH (dew point temperature: -60°C).

### (Vibration of blade)

In the present step, the center portion of the blade in the width direction vibrates, and any vibration which can apply shear to the contacted electrode material by vibration may be used. In a case where the center portion of the blade in the width direction vibrates, both end parts of the blade in the width direction may or may not vibrate. From the viewpoint of forming an electrode material film having a rectangular cross section, it is preferable that the both end parts of the blade in the width direction do not vibrate or vibrate with a smaller amplitude than the center portion of the blade in the width direction.

The vibration direction in a case where the blade vibrates is not particularly limited.

An amplitude of the vibration of the blade is, for example, preferably 1 µm to 60 µm and more preferably 6 µm to 10 µm.

In addition, a frequency of the vibration of the blade is, for example, preferably 100 Hz to 1,000 Hz and more preferably 200 Hz to 1,000 Hz. The frequency of the vibration of the blade may include a plurality of frequencies. For example, the vibration of the blade may be a vibration in which a plurality of frequency peaks of 150 Hz, 300 Hz, and 450 Hz are detected.

Here, the amplitude and the frequency of the vibration can be measured using an acceleration sensor or a vibration measuring instrument. In a case where a plurality of frequency peaks are detected during the measurement of the vibration of the blade, a frequency having the smallest value is referred to as the "frequency of the vibration of the blade", and an amplitude at this frequency is referred to as the "amplitude of the vibration of the blade". For example, in a case where a plurality of frequency peaks of 150 Hz, 300 Hz, and 450 Hz are detected for the vibration of the blade, 150 Hz is defined as the "frequency of the vibration of the blade", and an amplitude at the frequency of 150 Hz is defined as the "amplitude of the vibration of the blade".

In addition, from the viewpoint of obtaining an electrode material film with less variation in thickness, a ratio A:B of an amplitude A at the center portion of the vibrating blade in the width direction and a thickness B of the electrode material film is preferably 1:10 to 1:200, more preferably 1:15 to 1:100, and still more preferably 1:20 to 1:80.

It is presumed that, in a case where the above-described ratio A:B satisfies 1:1 to 1:200, the shear due to vibration can be effectively applied to the contacted electrode material, the decrease in viscosity and the improvement in fluidity of the electrode material are easily achieved, and the electrode material film with less variation in thickness can be obtained.

Here, the thickness B of the electrode material film is measured by the same method as the average thickness of the support.

In the present step, the exciter for vibrating the center portion of the blade in the width direction is not particularly limited as long as the blade can be vibrated; and examples thereof include an air type vibrator, a motor type vibrator, a piezoelectric oscillator, and an ultrasonic oscillator.

### (Pressure applied to electrode material)

In the present step, the thickness and the width of the electrode material supplied onto the support are regulated by relatively moving the blade along the surface of the support while vibrating the center portion of the blade in the width direction; but in this case, a pressure is applied to the electrode material in contact with the center portion of the blade in the width direction.

The pressure applied to the electrode material in contact with the blade is not particularly limited as long as an electrode material film having a desired shape including a thickness, a density, surface properties, and the like can be formed; and may be appropriately determined according to physical properties of the electrode material (adhesiveness to the support, such as fluidity, viscosity, and surface tension, for example, a high or low yield value).

For example, in a case where the electrode material has a yield value, it is preferable to apply a pressure to the electrode material in contact with the blade such that the pressure exceeds the yield value of the electrode material and the electrode material starts to flow. It is presumed that, by adopting the aspect, since the fluidity of the electrode material is improved over the entire thickness direction of the electrode material, the electrode material film with less variation in thickness is easily obtained.

Examples of a method of changing the pressure applied to the electrode material in contact with the blade include a method of adjusting one or more of the distance between the surface of the support and the distal end of the blade, a pressure for pressing the blade toward the surface of the support, a self-weight of the blade, and the like.

A method of installing the blade so as to maintain a constant distance from the surface of the support is not limited to the method using the pressurization shaft and the air cylinder as described in Figs. 1 and 2; and a known method can be applied.

It is preferable to adopt a method capable of adjusting the pressure for pressing the blade against the surface of the support, such as the method using the pressurization shaft and the air cylinder.

### [Electrode material]

The electrode material used in the present step contains an electrode active material and has a concentration of solid components of 30% by volume or more. Here, the "has a concentration of solid components of 30% by volume or more" means that a content of the solid components with respect to the total volume of the electrode material is 30% by volume or more.

The concentration of solid components in the electrode material is preferably 40% by volume or more, and more preferably 45% by volume or more. The upper limit of the concentration of solid components in the electrode material may be 100% by volume or less, or may be less than 100% by volume.

Here, the concentration of solid components in the electrode material is calculated from a compositional ratio of each component contained in the electrode material and a specific gravity of the components.

The electrode material contains an electrode active material, and may contain a component other than the electrode active material as necessary. The electrode active material constitutes at least a part of the solid components.

Hereinafter, components contained in the electrode material will be described.

### (Electrode active material)

The electrode active material is a substance capable of intercalating and deintercalating ions of a metal element belonging to Group 1 or Group 2 in the periodic table.

Examples of the electrode active material include a positive electrode active material and a negative electrode active material.

### -Positive electrode active material-

The positive electrode active material is not limited, and a known active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced by a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to easily form aggregates of the electrode material, and it is possible to suppress scattering of the electrode material during handling. In a case where the volume average particle diameter of the positive electrode active material is 40 µm or less, the thickness of the molded body for an electrode can be easily adjusted, and generation of voids in the molding process can be suppressed.

The volume average particle diameter of the positive electrode active material is measured by the following method.

A dispersion liquid containing 0.1% by mass of the positive electrode active material is prepared by mixing the positive electrode active material with a solvent (for example, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-920 manufactured by Horiba, Ltd.), data is taken in 50 times under a condition of a temperature of 25°C, and the volume average particle diameter is obtained. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

The electrode material may contain only one kind of the positive electrode active material or may contain two or more kinds of the positive electrode active materials.

In addition, even in a case where the electrode material contains one kind of the positive electrode active material, positive electrode active materials having different particle diameters may be used in combination.

A content of the positive electrode active material with respect to the total volume of the electrode material is preferably 30% by volume to 60% by volume, more preferably 35% by volume to 55% by volume, and still more preferably 40% by volume to 50% by volume.

### -Negative electrode active material-

The negative electrode active material is not limited, and a known active material used for a positive electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced by a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured by a method based on the method of measuring the volume average particle diameter of the positive electrode active material described above.

Examples of a method of adjusting the particle diameter of the negative electrode active material include a method of using a pulverizer or a classifier.

The electrode material may contain only one kind of the negative electrode active material or may contain two or more kinds of the negative electrode active materials.

A content of the negative electrode active material with respect to the total volume of the electrode material is preferably 30% by volume to 60% by volume, more preferably 35% by volume to 57% by volume, and still more preferably 45% by volume to 55% by volume.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Inorganic solid electrolyte)

From the viewpoint of improving battery performance (for example, a discharge capacity and output characteristics), it is preferable that the electrode material contains an inorganic solid electrolyte.

Here, the "solid electrolyte" means a solid electrolyte in which ions can be moved therein.

The inorganic solid electrolyte is included in the solid components.

Since the inorganic solid electrolyte does not contain an organic substance as a main ion conducting material, the inorganic solid electrolyte is clearly distinguished from an organic solid electrolyte (for example, a polymer electrolyte represented by polyethylene oxide (PEO) and an organic electrolyte salt represented by lithium bis(trifluoromethanesulfonyl)imide (LiTFSI)). In addition, since the inorganic solid electrolyte is a solid in a steady state, the inorganic solid electrolyte is not dissociated or liberated into cations or anions. Therefore, the inorganic solid electrolyte is also clearly distinguished from an inorganic electrolyte salt (for example, LiPF₆, LiBF₄, lithium bis(fluorosulfonyl)imide (LiFSI), and LiCl) which dissociates or liberates into cations or anions in an electrolytic solution or a polymer.

The inorganic solid electrolyte is not limited as long as it is an inorganic solid electrolyte having an ion conductivity of a metal element belonging to Group 1 or Group 2 in the periodic table, and the inorganic solid electrolyte generally does not have electron conductivity.

In a case where the molded body for an electrode obtained by the manufacturing method of a molded body for an electrode according to the present disclosure is used for a lithium ion battery, the inorganic solid electrolyte preferably has ion conductivity of lithium ions.

Examples of the inorganic solid electrolyte include a sulfide-based inorganic solid electrolyte and an oxide-based inorganic solid electrolyte.

Among the above, from the viewpoint of being able to form a favorable interface between the active material and the inorganic solid electrolyte, the inorganic solid electrolyte is preferably a sulfide-based inorganic solid electrolyte.

### -Sulfide-based inorganic solid electrolyte-

It is preferable that the sulfide-based inorganic solid electrolyte preferably contains a sulfur atom (S), has an ion conductivity of a metal element belonging to Group 1 or Group 2 in the periodic table, and has electron-insulating properties.

The sulfide-based inorganic solid electrolyte more preferably contains at least Li, S, and P and has lithium ion conductivity. The sulfide-based inorganic solid electrolyte may contain an element other than Li, S, and P, as necessary.

Examples of the sulfide-based inorganic solid electrolyte include an inorganic solid electrolyte having a composition represented by Formula (A).

Lₐ₁M_{b1}P_{c1}S_{d1}Aₑ₁ : Formula (A)

In Formula (A), L represents at least one element selected from the group consisting of Li, Na, and K, and it is preferably Li.

In Formula (A), M represents at least one element selected from the group consisting of B, Zn, Sn, Si, Cu, Ga, Sb, Al, and Ge; and it is preferably B, Sn, Si, Al, or Ge, and more preferably Sn, Al, or Ge.

In Formula (A), A represents at least one element selected from the group consisting of I, Br, Cl, and F; and it is preferably I or Br, and more preferably I.

In Formula (A), a1 represents 1 to 12, preferably 1 to 9 and more preferably 1.5 to 4.

In Formula (A), b1 represents 0 to 1, preferably 0 to 0.5.

In Formula (A), c1 represents 1.

In Formula (A), d1 represents 2 to 12, preferably 3 to 7 and more preferably 3.25 to 4.5.

In Formula (A), e1 represents 0 to 5, preferably 0 to 3 and more preferably 0 or 1.

In Formula (A), it is preferable that b1 and e1 are 0; it is more preferable that b1 and e1 are 0 and a ratio of a1, c1, and d1 (that is, a1:c1:d1) is 1 to 9:1:3 to 7; and it is particularly preferable that b1 and e1 are 0 and a ratio of a1, c1, and d1 (that is, a1:c1:d1) is 1.5 to 4:1:3.25 to 4.5.

The compositional ratio of each element can be controlled, for example, by adjusting a blending amount of a raw material compound in a case of producing the sulfide-based inorganic solid electrolyte.

The sulfide-based inorganic solid electrolyte may be non-crystalline (glass) or crystallized (made into glass ceramic), or may be only partially crystallized. Examples of the above-described sulfide-based inorganic solid electrolyte include Li-P-S-based glass containing Li, P, and S, and Li-P-S-based glass ceramic containing Li, P, and S. Among the above, the sulfide-based inorganic solid electrolyte is preferably Li-P-S-based glass.

A lithium ion conductivity of the sulfide-based inorganic solid electrolyte is preferably 1 × 10⁻⁴ S/cm or more, and more preferably 1 × 10⁻³ S/cm or more. The upper limit of the lithium ion conductivity of the sulfide-based inorganic solid electrolyte is not limited, but for example, it is practically 1 × 10⁻¹ S/cm or less.

The sulfide-based inorganic solid electrolyte can be produced, for example, by (1) a reaction of lithium sulfide (Li₂S) and phosphorus sulfide (for example, diphosphorus pentasulfide (P₂S₅)), (2) a reaction of lithium sulfide and at least one of a phosphorus single body or a sulfur single body, or (3) a reaction of lithium sulfide and phosphorus sulfide (for example, diphosphorus pentasulfide (P₂S₅)) and at least one of a phosphorus single body or a sulfur single body.

In the production of the Li-P-S-based glass and the Li-P-S-based glass ceramic, a molar ratio (Li₂S:P₂S₅) of Li₂S and P₂S₅ is preferably 65:35 to 85:15, and more preferably 68:32 to 77:23. By setting the molar ratio of Li₂S and P₂S₅ to be within the above-described range, the lithium ion conductivity can be further increased.

Examples of the sulfide-based inorganic solid electrolyte include a compound formed of a raw material composition containing Li₂S and a sulfide of elements of Group 13 to Group 15.

Examples of the raw material composition include Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, and Li₁₀GeP₂S₁₂. Among the above, from the viewpoint of high lithium ion conductivity, the raw material composition is preferably Li₂S-P₂S₅, Li₂S-GeS₂-Ga₂S₃, Li₂S-SiS₂-P₂S₅, Li₂S-SiS₂-Li₄SiO₄, Li₂S-SiS₂-Li₃PO₄, Li₂S-LiI-Li₂O-P₂S₅, Li₂S-Li₂O-P₂S₅, Li₂S-Li₃PO₄-P₂S₅, Li₂S-GeS₂-P₂S₅, or Li₁₀GeP₂S₁₂, and more preferably Li₂S-P₂S₅, Li₁₀GeP₂S₁₂, or Li₂S-P₂S₅-SiS₂.

Examples of a method of producing the sulfide-based inorganic solid electrolyte using the above-described raw material composition include an amorphorization method.

Examples of the amorphorization method include a mechanical milling method and a melting quenching method. Among the above, from the viewpoint of enabling treatment at normal temperature and simplifying the production process, a mechanical milling method is preferable.

### -Oxide-based inorganic solid electrolyte-

It is preferable that the oxide-based inorganic solid electrolyte preferably contains an oxygen atom (O), has an ion conductivity of a metal element belonging to Group 1 or Group 2 in the periodic table, and has electron-insulating properties.

An ion conductivity of the oxide-based inorganic solid electrolyte is preferably 1 × 10⁻⁶ S/cm or more, more preferably 5 × 10⁻⁶ S/cm or more, and particularly preferably 1 × 10⁻⁵ S/cm or more. The upper limit of the ion conductivity of the oxide-based inorganic solid electrolyte is not limited, but for example, it is practically 1 × 10⁻¹ S/cm or less.

Examples of the oxide-based inorganic solid electrolyte include the following compounds. However, the oxide-based inorganic solid electrolyte is not limited to the following compounds.
(1) LiₓₐLa_{ya}TiO₃ (hereinafter, referred to as "LLT"; xa satisfies 0.3 ≤ xa ≤ 0.7 and ya satisfies 0.3 ≤ ya ≤ 0.7)
(2) Li_{xb}La_{yb}Zr_{zb}M^{bb}_{mb}O_{nb} (M^{bb} is at least one element selected from the group consisting of Al, Mg, Ca, Sr, V, Nb, Ta, Ti, Ge, In, and Sn, xb satisfies 5 ≤ xb ≤ 10, yb satisfies 1 ≤ yb ≤ 4, zb satisfies 1 ≤ zb ≤ 4, mb satisfies 0 ≤ mb ≤ 2, and nb satisfies 5 ≤ nb ≤ 20)
(3) Li_{xc}B_{yc}M^{cc}_{zc}O_{nc} (M^{cc} is at least one element selected from the group consisting of C, S, Al, Si, Ga, Ge, In, and Sn, xc satisfies 0 ≤ xc ≤ 5, yc satisfies 0 ≤ yc ≤ 1, zc satisfies 0 ≤ zc ≤ 1, and nc satisfies 0 ≤ nc ≤ 6)
(4) Li_{xd}(Al,Ga)_{yd}(Ti,Ge)_{zd}Si_{ad}P_{md}O_{nd} (xd satisfies 1 ≤ xd ≤ 3, yd satisfies 0 ≤ yd ≤1, zd satisfies 0 ≤ zd ≤ 2, ad satisfies 0 ≤ ad ≤ 1, md satisfies 1≤ md ≤7, and nd satisfies 3 ≤ nd ≤ 13)
(5) Li₍₃₋₂ₓₑ₎M^{ee}ₓₑD^{ee}O (xe satisfies 0 ≤ xe ≤ 0.1, M^{ee} represents a divalent metal atom, and D^{ee} represents a halogen atom or a combination of two or more halogen atoms)
(6) Li_{xf}Si_{yf}O_{zf} (xf satisfies 1 ≤ xf ≤ 5, yf satisfies 0 < yf ≤ 3, and zf satisfies 1 ≤ zf ≤ 10)
(7) Li_{xg}S_{yg}O_{zg} (xg satisfies 1 ≤ xg ≤ 3, yg satisfies 0 < yg ≤ 2, and zg satisfies 1 ≤ zg ≤ 10)
(8) Li₃BO₃
(9) Li₃BO₃-Li₂SO₄,
(10) Li₂O-B₂O₃-P₂O₅
(11) Li₂O-SiO₂
(12) Li₆BaLa₂Ta₂O₁₂
(13) Li₃PO_{(4-3/2w})N_{w} (w satisfies w < 1)
(14) Li_{3.5}Zn_{0.25}GeO₄ having a lithium super ionic conductor (LISICON)-type crystal structure
(15) La_{0.55}Li_{0.35}TiO₃ having a perovskite-type crystal structure
(16) LiTi₂P₃O₁₂ having a natrium super ionic conductor (NASICON)-type crystal structure
(17) Li_{1+xh+yh}(Al,Ga)ₓₕ(Ti,Ge)₂₋ₓₕSi_{yh}P_{3-yh}O₁₂ (xh satisfies 0 ≤ xh ≤ 1 and yh satisfies 0 ≤ yh ≤ 1)
(18) Li₇La₃Zr₂O₁₂ (hereinafter, referred to as "LLZ") having a garnet-type crystal structure

As the oxide-based inorganic solid electrolyte, a phosphorus compound containing Li, P, and O is also preferable. Examples of the phosphorus compound containing Li, P, and O include lithium phosphate (Li₃PO₄), LiPON in which a part of oxygen of lithium phosphate is substituted with nitrogen, and LiPOD1 (D1 represents at least one element selected from the group consisting of Ti, V, Cr, Mn, Fe, Co, Ni, Cu, Zr, Nb, Mo, Ru, Ag, Ta, W, Pt, and Au).

As the oxide-based inorganic solid electrolyte, LiAlON (Al is at least one element selected from the group consisting of Si, B, Ge, Al, C, and Ga) is also preferable.

Among the above, the oxide-based inorganic solid electrolyte is preferably LLT, Li_{xb}La_{yb}Zr_{zb}M^{bb}_{mb}O_{nb} (M^{bb}, xb, yb, zb, mb, and nb are as described above), LLZ, Li₃BO₃, Li₃BO₃-Li₂SO₄, or Li_{xd}(Al, Ga)_{yd}(Ti, Ge)_{zd}Si_{ad}P_{md}O_{nd} (xd, yd, zd, ad, md, and nd are as described above); more preferably LLT, LLZ, LAGP (Li_{1.5}Al_{0.5}Ge_{1.5}(PO₄)₃), or LATP ([Li_{1.4}Ti₂Si_{0.4}P_{2.6}O₁₂]-AlPO₄); and particularly preferably LLZ.

The inorganic solid electrolyte preferably has a particle shape.

A volume average particle diameter of the inorganic solid electrolyte is preferably 0.01 µm or more, and more preferably 0.1 µm or more. The upper limit of the volume average particle diameter of the inorganic solid electrolyte is preferably 100 µm or less, and more preferably 50 µm or less.

The volume average particle diameter of the inorganic solid electrolyte is measured by a method based on the method of measuring the volume average particle diameter of the positive electrode active material described above.

The electrode material may contain only one kind of the inorganic solid electrolyte or may contain two or more kinds of the inorganic solid electrolytes.

In a case where the electrode material contains the inorganic solid electrolyte, from the viewpoint of reducing an interface resistance and maintaining battery characteristics (for example, improving cycle characteristics), a content of the inorganic solid electrolyte with respect to the total volume of the electrode material is still more preferably 25% by volume to 35% by volume.

### (Conductive auxiliary agent)

From the viewpoint of improving electron conductivity of the active material, the electrode material preferably contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The electrode material may contain only one kind of the conductive auxiliary agent or may contain two or more kinds of the conductive auxiliary agents.

In a case where the electrode material contains the conductive auxiliary agent, from the viewpoint of improving the electron conductivity of the active material, a content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

### (Electrolytic solution)

The electrode material may contain an electrolytic solution.

The electrolytic solution is included in liquid components.

The electrolytic solution is not limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

Examples of the electrolyte contained in the electrolytic solution also include the materials described in the section of "Inorganic solid electrolyte" above.

As a component of the electrolytic solution, for example, an ionic liquid may be used. The ionic liquid may be used as the electrolyte or the solvent.

A content of the electrolytic solution with respect to the total volume of the electrode material is preferably 70% by volume or less, more preferably 60% by volume or less, and still more preferably 55% by volume or less. In a case where the content of the electrolytic solution in the electrode material is 70% by volume or less, it is possible to suppress the electrolytic solution from bleeding out in a case where the electrode material is molded.

The lower limit of the content of the electrolytic solution in the electrode material is not limited, and may be 0% by volume or more and may exceed 0% by volume.

The electrode material may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The electrode material may contain only one kind of the solvent or may contain two or more kinds of the solvents.

A content of the liquid components (that is, the electrolytic solution and the solvent) with respect to the total volume of the electrode material is preferably 70% by volume or less, more preferably 60% by volume or less, and still more preferably 55% by volume or less.

In a case where the content of the liquid components in the electrode material is 70% by volume or less, it is possible to suppress the liquid components from bleeding out in a case where the electrode material is molded.

In addition, in a case where the liquid components includes the solvent, deterioration in battery performance can be suppressed.

The lower limit of the content of the liquid components in the electrode material is not limited, and may be 0% by volume or more and may exceed 0% by volume.

The liquid component in the electrode material, that is, the component in the electrode material, which is in a liquid state at 25°C, is preferably in a liquid state even at -10°C and preferably in a liquid state even at -20°C. That is, the component in the electrode material, which is in a liquid state at 25°C, is preferably a component which does not solidify at -10°C, and preferably a component which does not solidify at -20°C.

### (Other components)

The electrode material may contain a binder, a dispersant, and other additives in addition to the above-described components.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode material can be used.

### (Method of preparing electrode material)

The electrode material can be prepared, for example, by mixing the electrode active material with the above-described components other than the electrode active material, as necessary.

Examples of the mixing method include a method using a ball mill, a beads mill, a planetary mixer, a blade mixer, a roll mill, a kneader, or a disc mill.

### (Supply of electrode material)

The electrode material is supplied onto the support, but a supply method thereof is not particularly limited. The supply of the electrode material onto the support may be carried out intermittently or continuously.

The supply amount of the electrode material may also be determined according to the size of the electrode material film to be formed.

### [Other steps]

The manufacturing method of a molded body for an electrode according to the present disclosure may include other steps.

Examples of the other steps include a step of pressurizing the electrode material film, and a step of, in a case where the support is release paper, transferring the electrode material film formed on the release paper to a collector.

### (Step of pressurizing electrode material film)

The manufacturing method of a molded body for an electrode according to the present disclosure may include a step of pressurizing the electrode material film obtained in the above-described step.

In a case where the manufacturing method of a molded body for an electrode according to the present disclosure includes the pressurization step, a density of the electrode material can be increased, and in-plane uniformity of density and thickness can be achieved.

Examples of a pressurizing unit used in the present step include a pair of pressurizing rolls and a press machine.

In a case of pressurizing the electrode material, a pressure is preferably 0.01 MPa to 100 MPa, more preferably 0.1 MPa to 50 MPa, and particularly preferably 0.2 MPa to 10 MPa.

In the present step, the electrode material film may be pressurized stepwise using a plurality of pressurizing units (for example, pairs of pressurizing rolls). By stepwise pressurizing the electrode material film using a plurality of pressurizing units, the density and thickness of the electrode material can be made more uniform.

For example, the electrode material film can be pressurized stepwise using a plurality of pairs of pressurizing rolls, in which a gap between the rolls is stepwise adjusted to be narrowed.

In the present step, it is preferable to move the pressurizing unit and the electrode material film (specifically, the support on which the electrode material film has been formed) relative to each other.

In the present disclosure, "move the pressurizing unit and the electrode material film relative to each other" includes moving the pressurizing unit in one direction with respect to the electrode material film, moving the electrode material film in one direction with respect to the pressurizing unit, and moving the pressurizing unit and the electrode material film in one direction, respectively; but it is preferable to move the electrode material film in one direction with respect to the pressurizing unit.

A unit for moving the electrode material film (specifically, the support on which the electrode material film has been formed) is not limited, and known transport units can be used. Examples thereof include a belt conveyor, a linear motion guide, and a cross roller table.

In the present step, from the viewpoint of improving formability, for example, the electrode material film heated at 30°C to 100°C may be pressurized.

### <<Molded body for sheet-like electrode>>

The molded body for a sheet electrode obtained by the manufacturing method of a molded body for a sheet-like electrode according to the present disclosure has excellent in-plane thickness uniformity, and thus can be used as various electrodes.

The molded body for a sheet-like electrode is preferably a molded body for an electrode of an all-solid state secondary battery.

From the viewpoint of improving battery performance (for example, a discharge capacity and output characteristics), an average thickness of the molded body for a sheet-like electrode is preferably 0.01 mm to 2 mm, more preferably 0.05 mm to 1.5 mm, and particularly preferably 0.1 mm to 1 mm.

The average thickness of the molded body for an electrode is measured by the same method as the average thickness of the support.

### Examples

Hereinafter, the present disclosure will be described in detail with reference to Examples, but the present disclosure is not limited thereto.

[Preparation of positive electrode material (P1)]
(1) 13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith; 64 g of the obtained 115.7 g of the mixed solution was taken out, and used as an electrolytic solution X1.
(2) 2 g of a conductive auxiliary agent (Ketjen black: "CARBON ECP600JD" manufactured by LION SPECIALTY CHEMICALS CO., LTD.) and 174 g of a positive electrode active material (iron phosphate: "LFP NCO M121" manufactured by Aleees) were stirred at 1,500 revolutions per minute (rpm; the same applies hereinafter) for 30 seconds with a mixer (AWATORI RENTARO ARE-310, manufactured by THINKY Corporation) to prepare a kneaded material Y1 (176 g).
(3) The electrolytic solution X1 (64 g) was added to the kneaded material Y1 (176 g), and the mixture was stirred at 1,500 rpm for 120 seconds with a mixer (AWATORI RENTARO ARE-310, manufactured by THINKY Corporation) to obtain a positive electrode material (P1).

The obtained positive electrode material (P1) was a Bingham plastic fluid having a yield value of 45 kPa, and a volume ratio of the solid components and the liquid components was 48:52.

[Preparation of negative electrode material (P2)]
(1) An electrolytic solution X1 (64 g) which was the same as that used for the positive electrode material (P1) was prepared.
(2) 159 g was weighed as a total amount of a conductive auxiliary agent (carbon black; "C-NERGY SUPER C45" manufactured by Imerys Graphite & Carbon) and a negative electrode active material ("MESOPHASE GRAPHITE POWDER A (MGP-A)" manufactured by China Steel Chemical Corporation) in which a mass ratio thereof was 2.7:63.4, and both were stirred at 900 rpm for 18 seconds with a mixer (AWATORI RENTARO ARE-310, manufactured by THINKY Corporation) to prepare a kneaded material Z1.
(3) The electrolytic solution X1 (64 g) was added to the kneaded material Z1 (159 g), and the mixture was stirred at 900 rpm for 30 seconds with a mixer (AWATORI RENTARO ARE-310, manufactured by THINKY Corporation) to obtain a negative electrode material (P2).

The obtained negative electrode material (P2) was a Bingham plastic fluid having a yield value of 20 kPa, and a volume ratio of the solid components and the liquid components was 52:48.

[Preparation of positive electrode material (P3)]
(1) 13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith; 62 g of the obtained 115.7 g of the mixed solution was taken out, and used as an electrolytic solution X2.
(2) 4 g of a conductive auxiliary agent (Ketjen black: "CARBON ECP600JD" manufactured by LION SPECIALTY CHEMICALS CO., LTD.) and 174 g of a positive electrode active material (iron phosphate: "LFP NCO M121" manufactured by Aleees) were stirred at 1,500 rpm for 30 seconds with a mixer (AWATORI RENTARO ARE-310, manufactured by THINKY Corporation) to prepare a kneaded material Y2 (178 g).
(3) The electrolytic solution X2 (62 g) was added to the kneaded material Y2 (178 g), and the mixture was stirred at 1,500 rpm for 120 seconds with a mixer (AWATORI RENTARO ARE-310, manufactured by THINKY Corporation) to obtain a positive electrode material (P2).

The obtained positive electrode material (P2) was a Bingham plastic fluid having a yield value of 60 kPa, and a volume ratio of the solid components and the liquid components was 47:53.

[Preparation of negative electrode material (P4)]
(1) An electrolytic solution X2 (62 g) which was the same as that used for the positive electrode material (P3) was prepared.
(2) 159 g was weighed as a total amount of a conductive auxiliary agent (carbon black; "C-NERGY SUPER C45" manufactured by Imerys Graphite & Carbon) and a negative electrode active material ("MESOPHASE GRAPHITE POWDER A (MGP-A)" manufactured by China Steel Chemical Corporation) in which a mass ratio thereof was 3.1:63, and both were stirred at 900 rpm for 18 seconds with a mixer (AWATORI RENTARO ARE-310, manufactured by THINKY Corporation) to prepare a kneaded material Z2.
(3) The electrolytic solution X2 (62 g) was added to the kneaded material Z2 (159 g), and the mixture was stirred at 900 rpm for 30 seconds with a mixer (AWATORI RENTARO ARE-310, manufactured by THINKY Corporation) to obtain a negative electrode material (P4).

The obtained negative electrode material (P4) was a Bingham plastic fluid having a yield value of 30 kPa, and a volume ratio of the solid components and the liquid components was 53:47.

### [Preparation of supports (S1) to (S4)]

Support (S1): positive electrode collector (aluminum foil, average thickness: 20 µm, Ra: 0.5 µm, EAA-218D, carbon-coated product manufactured by Korea JCC.)
Support (S2): positive electrode collector (aluminum foil, average thickness: 20 µm, Ra: 0.035 µm, manufactured by UACJ Corporation)
Support (S3): negative electrode collector (copper foil, average thickness: 10 µm, Ra: 0.55 µm, manufactured by Nippon Denkai Co., Ltd.)
Support (S4): negative electrode collector (copper foil, average thickness: 12 µm, Ra: 0.3 µm, manufactured by FURUKAWA ELECTRIC CO., LTD.)

The Ra of the collector described above refers to an arithmetic average roughness Ra on a surface on which the electrode material film is formed.

### [Preparation of blades (B1) and (B2)]

Blade (B1): blade made of stainless steel (blade having the same configuration as the blade 20A shown in Fig. 4, in which the body part 26A of the blade and the protruding parts 28A are joined to each other; length of body part 26A of blade: 225 mm, width (length) of center portion 22 in width direction: 211 mm, width (length) of both end parts 24 in width direction: 7 mm each, protrusion height of both end parts 24 in width direction (height of protruding part 28A): 0.3 mm, maximum height of blade 20A: 100 mm, thickness of blade 20A: 10 mm)

Blade (B2): laminated blade including a PTFE layer and a stainless steel layer, which constitute the contact portion with the electrode material (blade having the same configuration as the blade 20B shown in Fig. 5, in which the body part 26B of the blade and the width regulation members 28B are joined to each other; length of body part 26B of blade (width (length) of center portion 22 in width direction): 180 mm, protrusion height of both end parts 24 in width direction: 0.3 mm, maximum height of blade 20B: 100 mm, thickness of blade 20B: 30 mm)

### [Measurement of friction coefficient µ1 and friction coefficient µ2]

The friction coefficient µ1 and the friction coefficient µ2 were measured by the method described above.
Friction coefficient µ1 between blade (B1) and positive electrode material (P1): 0.4
Friction coefficient µ1 between blade (B1) and negative electrode material (P2): 0.18
Friction coefficient µ1 between blade (B2) and positive electrode material (P1): 0.27
Friction coefficient µ1 between blade (B2) and negative electrode material (P2): 0.2
Friction coefficient µ2 between positive electrode material (P1) and support (S1): 0.59
Friction coefficient µ2 between positive electrode material (P1) and support (S2): 0.35
Friction coefficient µ2 between negative electrode material (P2) and support (S3): 0.4
Friction coefficient µ2 between negative electrode material (P2) and support (S4): 0.25
Friction coefficient µ1 between blade (B1) and positive electrode material (P3): 0.6
Friction coefficient µ1 between blade (B1) and negative electrode material (P4): 0.3
Friction coefficient µ1 between blade (B2) and positive electrode material (P3): 0.42
Friction coefficient µ1 between blade (B2) and negative electrode material (P4): 0.225
Friction coefficient µ2 between positive electrode material (P3) and support (S1): 0.75
Friction coefficient µ2 between positive electrode material (P3) and support (S2): 0.52
Friction coefficient µ2 between negative electrode material (P4) and support (S3): 0.6
Friction coefficient µ2 between negative electrode material (P4) and support (S4): 0.34

### <Example 1-1>

An electrode material film was formed on a support using the device shown in Figs. 1 and 2. As the support, the blade, and the electrode material, those shown in Table 1 were used.

Specifically, the blade 20 was installed such that a constant distance C: 400 µm was maintained from the center portion of the blade 20 in the width direction with respect to the surface of the support 10 placed on the movement stage 70. In this case, the distance between the both ends of the blade 20 in the width direction and the surface of the support 10 was set to 100 µm.

Here, as the support 10, a support (1) to which a heat-fusible layer of a PET film including a heat-fusible layer containing an ethylene-vinyl acetate copolymer (EVA) was bonded to a back surface thereof by heat fusion was used.

The electrode material 30 was supplied between the support 10 and the blade 20 to form a reservoir portion, and then the support 10 was moved in the arrow direction by the movement stage 70, so that the thickness and the width of the electrode material 30 were regulated by the blade 20, whereby the electrode material film 34 formed of the electrode material 30 was formed on the support 10 as shown in Fig. 2. The supply amount X of the electrode material 30 to the reservoir portion and the formation amount Y of the electrode material film were set to values shown in Table 1.

In a case where the electrode material 30 passed through the above-described void having the distance C, the blade 20 was vibrated by the exciter 60. The amplitude A of the vibrating blade was 7 µm, and the period thereof was 300 Hz.

In addition, the thickness B of the formed electrode material film 34 was 325 µm.

### <Examples 1-2 to 1-6>

An electrode material film (a molded body for a sheet-like positive electrode) having a thickness B of 325 µm was obtained in the same manner as in Example 1-1, except that the types of the support, the blade, and the electrode material were appropriately changed as shown in Table 1, and the values of the distance C, the amplitude A of the blade vibration, the supply amount X of the electrode material to the reservoir portion, and the formation amount Y of the electrode material film were appropriately changed as shown in Table 1.

### <Examples 2-1 to 2-6>

An electrode material film (a molded body for a sheet-like negative electrode) having a thickness B of 335 µm was obtained in the same manner as in Example 1-1, except that the types of the support, the blade, and the electrode material were appropriately changed as shown in Table 2, and the values of the distance C, the amplitude A of the blade vibration, the thickness B of the electrode material film, the supply amount X of the electrode material to the reservoir portion, and the formation amount Y of the electrode material film were appropriately changed as shown in Table 2.

### <Comparative Example 1>

An electrode material film was formed on the support in the same manner as in Example 1-1, except that the blade was not vibrated. In Comparative Example 1, although an electrode material film having a thickness of 400 µm was obtained at the initial stage of starting to move the support 10 in the arrow direction, a part of the film was torn off and a continuous film could not be formed. Therefore, the thickness B of the electrode material film was not able to be measured.

### <Comparative Example 2>

An electrode material film was formed on the support in the same manner as in Example 2-1, except that the blade was not vibrated. In Comparative Example 2, although an electrode material film having a thickness of 400 µm was obtained at the initial stage of starting to move the support 10 in the arrow direction, a part of the film was torn off and a continuous film could not be formed. Therefore, the thickness B of the electrode material film was not able to be measured.

### <Evaluation of in-plane thickness uniformity>

The thickness of the obtained molded body for a sheet-like electrode was derived by installing a contact-type displacement meter manufactured by Mitutoyo Corporation on a base plate, measuring the thickness of the sheet together with a collector foil, and subtracting an average thickness of the collector foil. For one sheet, measurement points were set to a total of nine points, three points in the width direction and three points in the longitudinal direction. In Comparative Examples 1 and 2, the measurement was carried out only for a portion where the continuous film was formed.

A rate of change in thickness was obtained from the obtained measured values. In the rate of change in thickness, the larger difference from an average value X_{Ave} was selected from the maximum value X_{Max} and the minimum value X_{Min} obtained from the measured values, and the rate of change in thickness was calculated by Expression 1.

Expression 1: Rate of change in thickness (%) = |Maximum value X_{Max} or minimum value X_{Min} - Average value X_{Ave}| ÷ Average value X_{Ave} × 100

Here, in Expression 1, the maximum value X_{Max} is the maximum value in the measured values (for 9 points); the minimum value X_{Min} is the minimum value in the measured values (for 9 points); and the average value X_{Ave} is an arithmetic average value of the measured values (for 9 points).

Based on the obtained value of the rate of change in thickness, in-plane thickness uniformity was evaluated according to the following standard.

### -Standard-

· A: value of the rate of change in thickness was 1% or less.
· B: value of the rate of change in thickness was more than 1% and 2% or less.
· C: value of the rate of change in thickness was more than 2% and 3% or less.
· D: value of the rate of change in thickness was more than 3% and 5% or less.
· E: value of the rate of change in thickness was more than 5%.

**[Table 1]**

| | Support | Ra | Blade | Material | Electrode material | Distance C [µm] | Friction coefficient µ1 | Friction coefficient µ2 | Amplitude A of vibration of blade [µm] | Thickness B of electrode material film [µm] | Supply amount X reservoir portion [g/min] | Formation amount Y of electrode material film [g/min] | Yield value of electrode material [kPa] | In-plane thickness uniformity |
|---|---|---|---|---|---|---|---|---|---|---|---|---|---|---|
| Example 1-1 | (S1) | 0.5 | (B1) | SUS | (P1) | 400 | 0.4 | 0.59 | 7 | 325 | 33 | 31.9 | 45 | B |
| Example 1-2 | (S1) | 0.5 | (B2) | PTFE | (P1) | 400 | 0.27 | 0.59 | 7 | 325 | 33 | 31.9 | 45 | A |
| Example 1-3 | (S2) | 0.035 | (B1) | SUS | (P1) | 400 | 0.4 | 0.35 | 7 | 325 | 33 | 31.9 | 45 | C |
| Example 1-4 | (S2) | 0.035 | (B2) | PTFE | (P1) | 400 | 027 | 0.35 | 7 | 325 | 33 | 31.9 | 45 | B |
| Example 1-5 | (S1) | 0.035 | (B2) | PTFE | (P3) | 400 | 0.42 | 0.75 | 7 | 325 | 33 | 31.9 | 60 | B |
| Example 1-6 | (S1) | 0.5 | (B2) | PTFE | (P1) | 400 | 0.27 | 0.59 | 7 | 325 | 31.9 | 31.9 | 45 | B |
| Comparative Example 1 | (S1) | 0.5 | (B1) | SUS | (P1) | 400 | 0.4 | 0.59 | No vibration | Undetectable | 33 | 31.9 | 45 | E |

**[Table 2]**

| | Support | Ra | Blade | Material | Electrode material | Distance C [um] | Friction coefficient µ1 | Friction coefficient µ2 | Amplitude A of vibration of blade [µm] | Thickness B of electrode material film [µm] | Supply amount X reservoir portion [g/min] | Formation amount Y of electrode material film [g/min] | Yield value of electrode material [kPa] | In-plane thickness uniformity |
|---|---|---|---|---|---|---|---|---|---|---|---|---|---|---|
| Example 2-1 | (S3) | 0.55 | (B1) | SUS | (P2) | 400 | 0.18 | 0.4 | 7 | 335 | 26 | 24.6 | 20 | A |
| Example 2-2 | (S3) | 0.55 | (B2) | PTFE | (P2) | 400 | 0.2 | 0.4 | 7 | 335 | 26 | 24.6 | 20 | B |
| Example 2-3 | (S4) | 0.3 | (B1) | SUS | (P2) | 400 | 0.18 | 0.25 | 7 | 335 | 26 | 24.6 | 20 | B |
| Example 2-4 | (S4) | 0.3 | (B2) | PTFE | (P2) | 400 | 0.2 | 0.25 | 7 | 335 | 26 | 24.6 | 20 | C |
| Example 2-5 | (S3) | 0.55 | (B1) | SUS | (P4) | 400 | 0.3 | 0.6 | 7 | 335 | 26 | 24.6 | 30 | B |
| Example 2-6 | (S3) | 0.55 | (B1) | SUS | (P2) | 400 | 0.18 | 0.4 | 7 | 335 | 24.6 | 24.6 | 20 | B |
| Comparative Example 2 | (S3) | 0.55 | (B1) | SUS | (P2) | 400 | 0.18 | 0.4 | No vibration | Undetectable | 26 | 24.6 | 20 | E |

From Tables 1 and 2, it was found that the molded bodies for an electrode, obtained in Examples 1-1 to 1-6 and Examples 2-1 to 2-6, were excellent in the in-plane thickness uniformity as compared with the molded bodies for an electrode, obtained in Comparative Examples 1 and 2.

### Explanation of References

10: support
20: blade
22: center portion of blade in width direction
24: both end parts of blade in width direction
26A, 26B: body part of blade
28A: protruding part
28B: width regulation member
30: electrode material
32: electrode material reservoir portion
34: electrode material film
40: pressurization shaft
50: air cylinder
60: exciter
70: movement stage
C: distance

The disclosure of JP2022-120972 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of a molded body for a sheet-like electrode, the manufacturing method comprising:
a step of forming an electrode material film on a support using an electrode material which contains an electrode active material and has a concentration of solid components of 30% by volume or more,
wherein, with the electrode material supplied onto the support, the electrode material film is formed by, while maintaining a constant distance from a surface of the support, relatively moving a blade having a shape in which both end parts in a width direction protrude than a center portion in the width direction and the center portion in the width direction vibrates, along the surface of the support such that a thickness is regulated by a void between the surface of the support and the center portion of the blade in the width direction and a width is regulated by both end parts of the blade in the width direction, which protrude than the center portion of the blade in the width direction.

2. The manufacturing method of a molded body for a sheet-like electrode according to claim 1,
wherein an electrode material before the regulation of thickness and width, which is at least a part of the electrode material supplied onto the support, forms a reservoir portion in a region sandwiched between the support and the blade.

3. The manufacturing method of a molded body for a sheet-like electrode according to claim 2,
wherein the electrode material is continuously or intermittently supplied to the reservoir portion.

4. The manufacturing method of a molded body for a sheet-like electrode according to claim 3,
wherein a ratio X:Y of a supply amount X of the electrode material to a liquid pool portion and a formation amount Y of the electrode material film formed on the support is 1:0.1 to 1:1 on a mass basis.

5. The manufacturing method of a molded body for a sheet-like electrode according to claim 1 or 2,
wherein a friction coefficient µ1 between a contact portion of the blade with the electrode material and the electrode material is smaller than a frictional coefficient µ2 between the electrode material and the support.

6. The manufacturing method of a molded body for a sheet-like electrode according to claim 1 or 2,
wherein a ratio A:B of an amplitude A at the center portion of the vibrating blade in the width direction and a thickness B of the electrode material film formed on the support is 1:10 to 1:200.
